# EUROPEAN PATENT APPLICATION

(11) **EP 2 842 924 A1**
(43) Date of publication of application: **04.03.2015**
(21) Application number: 13004313.6
(22) Date of filing: 03.09.2013
(51) Int. Cl.: C04B 28/06, C04B 7/32, C04B 111/00

(54) **Composite binder comprising calcium sulfoaluminate cement and calcium nitrate or calcium nitrite**

(71) Applicant: HeidelbergCement AG, 69120 Heidelberg (DE)
(72) Inventor: Bullerjahn, Frank, 69181 Leimen (DE); Ben Haha, Mohsen, 69117 Heidelberg (DE); Mikanovic, Ingrid, 69181 Leimen (DE); Schmitt, Dirk, 69181 Leimen (DE)
(74) Representative: Wagner, Jutta

(57) **Abstract**

The present invention relates to composite binders comprising calcium sulfoaluminate cement and supplementary cementitious materials with a weight ratio of calcium sulfate to the sum of ye'elimite, aluminates and ferrites in the range from 0.1 to 0.9, that further comprise calcium nitrate and/or calcium nitrite, a method of enhancing the strength development of composite binders comprising calcium sulfoaluminate cement and supplementary cementitious materials by adding calcium nitrate and/or calcium nitrite and to the use of calcium nitrate and/or calcium nitrite as strength enhancing additive for composite binder comprising calcium sulfoaluminate cement and supplementary cementitious materials.

## Description

The present invention relates to composite binders comprising calcium sulfoaluminate based cement / clinker types and supplementary cementitious materials, a method of enhancing their strength development and to the use of calcium nitrate and/or calcium nitrite as strength enhancing additive for them.

Calcium sulfoaluminate (CSA) cements are made from clinkers that include ye'elimite (Ca₄(AlO₂)₆SO₄ or C₄A₃$ in cement chemist's notation) as a major phase. These binders are used as constituents in expansive cements, in ultra-high early strength cements and in "low-energy" cements. Hydration of CSA cements leads to the formation of mainly ettringite and/or monophases as e.g. monosulfate. Aluminium hydroxide may probably be another hydration product of this binder. The amount and kinetics of formation strongly depend on the cement composition as e.g. the amount and type of sulfate bearing phases being present. Special physical properties (such as intentional expansive behaviour or rapid reaction) are obtained by the adjustment of the availability of calcium and sulfate ions. The use of CSA cement as a low-energy alternative to Portland cement has been pioneered in China, where several million tons per year are produced. The energy demand for production is lower because of the decreased kiln temperatures required for reactions, the better grindability and the lower amount of limestone in the raw mix, which needs to be endothermically decarbonated. In addition, the lower limestone content and lower fuel consumption leads to a CO₂ emission around half of that of Portland cement clinker.

Within the context of the present invention, clinker shall mean a sinter product which is obtained by burning a raw material mixture at an elevated temperature and which contains at least one hydraulically reactive phase. Cement denotes a clinker that is ground with or without adding further components. Binder or binder mixture denotes a mixture hardening hydraulically and comprising cement and typically, but not necessarily, additional finely ground components, and which is used after adding water, optionally admixtures and/or additives and aggregate. A clinker may already contain all the necessary or desired phases and be used directly as a binder after being ground to cement.

Another approach to save energy and valuable raw materials is the application of secondary raw materials or industrial by-products as raw meal components to replace primary mineral based raw materials during clinker production.

In a further approach supplementary cementitious materials, which are often industrial by-products or wastes, are used to replace parts of the clinker during cement production and therefore save energy and primary raw material sources. These materials most often possess a pozzolanic or latent hydraulic reactivity and contribute to the mechanical performance of these composite binders.

Constituents that are permitted in Portland-composite cements are artificial pozzolans (like e.g. blastfurnace slag, silica fume, synthetic glasses and fly ashes) or natural pozzolans (like e.g. siliceous or siliceous aluminous materials such as volcanic ash glasses, calcined clays and shale). Portland blastfurnace cement contains up to 70% ground granulated blast furnace slag, the rest being Portland clinker and a little sulfate as e.g. gypsum. These composite cements typically produce high ultimate strength, but as slag content is increased, early strength is reduced, while potentially sulfate resistance increases and heat evolution diminishes. Portland fly ash cement contains up to 35% fly ash. The fly ash possesses a pozzolanic behaviour, so that ultimate strength is maintained or even increased. Because fly ash addition allows a lower water to binder ratio and as a result thereof a lower total water content, early strength can also be maintained.

Supplementary cementitious materials can be divided into latent hydraulic materials and pozzolans. Latent hydraulic materials are not hydraulic on their own or react only very slowly. They need an activation to undergo hydraulic reaction within useful time periods. Activation is typically achieved by (addition of) earth alkali metal or alkali metal compounds (e.g. Ca(OH)₂, NaOH, KOH, etc.) or sulfate providing materials (CaSO₄, Na₂SO₄, K₂SO₄, etc.), which are able to support the formation of calcium (aluminium) silicate hydrates and/or ettringite and/or others like e.g. AFₘ-phases (strätlingite, monosulfate, monocarbonate hemicarbonate etc.) or zeolite-like mineral. Pozzolans are siliceous or alumino-siliceous materials that react with calcium hydroxide from other components of a binder to form calcium silicate hydrates. The foregoing distinction is not always applied strictly, i.e. many fly ashes contain considerable amounts of calcium and are latent hydraulic materials, therefore, but usually they are designated pozzolans, nonetheless. For the present invention the distinction is not important and both are summarized as supplementary cementitious materials, partly abbreviated SCM herein.

Typical supplementary cementitious materials are natural or artificial pozzolans and latent hydraulic materials, e.g. but not exclusively ground granulated blast furnace slag, and natural or artificial pozzolans, e.g. but not exclusively type-C and/or type-F fly ashes, calcined clays or shales, trass, brick-dust, artificial glasses, silica fume, and burned organic matter residues rich in silica such as rice husk ash, or mixtures thereof.

A problem of portland cement and portland-composite cements is the increasing demand of high early strength. Time granted for construction is continuously decreasing. In the manufacturing of building elements a fast form removal is desired to optimize investment return. Therefore, binders providing high early strength are required, of course without decreasing ultimate strength, durability or workability. There further remains the object to provide cements that have a minimal environmental impact with regard to energy and natural raw materials.

There have been some proposals to add SCM to calcium sulfoaluminate cements.

GB 2490010 describes cementitious compositions containing (a) 60-94% of at least one pozzolanic material; (b) at least 0.5% calcium sulfoaluminate; (c) 1.2-11 %, expressed as SO₃, of at least one inorganic sulfate; and (d) a total sulfate content, expressed as SO₃, of at least 3 %, wherein the cementitious composition includes, at most 3% natural lime, and at most 10% alumina cement. Strength development of this system is mainly based on ettringite, it is a so called super sulfated system with a ratio of calcium sulfate to ye'elimite + aluminates + ferrites of more than 1, the CSA and at least on source of CaO / Ca(OH)₂, originating from the addition of e.g. CaO or OPC, is used as activator for early strength.

In Zivica V., "Possibility of the modification of the properties of sulfoaluminate belite cement by its blending", Ceramics - Silikaty 45 (1), 24-30, (2001) the addition of 5 %, 15 % and 30 % SCM to a CSA cement containing about 53 % C₂S, 34 % C₄A₃$, 8 % C₄AF and 5 % C$ is studied. From the explanations it is apparent that overburned or "dead burned" anhydrite is part of the clinker and that the SCMs are mostly performing as inactive fillers. Consequently, the article suggests that SCM contents below 15 % are optimal. A significant energy saving seems not possible therewith.

In Quillin K., BRE "Low-CO₂ Cements based on Calcium Sulfo-aluminate" (http://www.soci.org/News/-/media/Files/Conference%20Downloads/ Low%20Carbon%20Cements%20Nov%2010/Sulphoaluminate_Cements_Keith_ Quillin_R.ashx, status 06.2013), the impact of adding 30 or 50 % ground granulated blast furnace slag or 30 % fly ash as well as the impact of sulfate content to a CSA cement containing about 22 % C₂S, 60 % C₄A₃$, 7 % C₄AF, 8 % C₃S and 5 % C₃A is studied. The ratio of calcium sulfate to the sum of C₄A₃$, aluminates and ferrites is adjusted to 0, 0.35, 0.93 or above 1.

EP 2 105 419 describes a belite-calcium sulfoaluminate-ferrite (BCSAF) cement composition comprising: a BCSAF clinker with the following mineralogical composition, based on the total weight of the clinker: 5 to 25% of a calcium aluminoferrite phase having the general formula C₂AₓF(₁₋ₓ), wherein x is from 0.2 to 0.8; 15 to 35% of a calcium sulfoaluminate phase; 40 to 75% of belite (C₂S); from 0.01 to 10% in total of one or more minor phases selected from calcium sulphates, alkali metal sulphates, perovskite, calcium aluminates, gehlenite, free lime and periclase and/or a vitreous phase; a water-soluble calcium salt; and an alkanolamine.

Surprisingly it was now found that calcium nitrate and calcium nitrite are able to enhance the strength development of composite binders comprising calcium sulfoaluminate cement and supplementary cementitious materials. Especially composite binders with a weight ratio R_{$/(Y+A+F)} of calcium sulfate to the sum of ye'elimite, aluminates and ferrites in the range from 0.1 to 0.9 provide good early and ultimate strength, while further diminishing the environmental impact compared to binders based on calcium sulfoaluminate cements without addition of SCMs.

The present invention solves the above mentioned problems with a composite binder comprising calcium sulfoaluminate cement and supplementary cementitious materials with a ratio R_{$/(Y+A+F)} of calcium sulfate to the sum of ye'elimite, aluminates and ferrites in the range from 0.1 to 0.9, that further comprise calcium nitrate and/or calcium nitrite, a method of enhancing the strength development of composite binders comprising calcium sulfoaluminate cement and supplementary cementitious materials by adding calcium nitrate and/or calcium nitrite and to the use of calcium nitrate and/or calcium nitrite as strength enhancing additive for composite binder comprising calcium sulfoaluminate cement and supplementary cementitious materials.

R_{$/(Y+A+F)} especially stands for
CaSO₄ / (Σ ye'elimite + Σ aluminates + Σ ferrites), wherein
- CaSO₄ represents the quantity of anhydrous calcium sulfate originating from CaSO₄, CaSO₄·0.5H₂O, or CaSO₄·2H₂O present in the binder
- Ye'elimite represents C₄A₃₋ₓFₓ$ with x ranging from 0 to 2, C₄A₃$ with other substitutions with one or more foreign ions, or mixtures thereof
- Σ Aluminates represents the sum of all phases based on calcium aluminates, preferably it means CA, C₁₂A₇, CA₂, C₃A, amorphous aluminate phases and mixtures thereof
- Σ Ferrites represents the sum of all phases based on calcium oxide and iron oxide, preferably it means C₂A_{y}F_{1-y}, with y ranging from 0.2 to 0.8, C₂F, CF, CF₂, amorphous ferritic phases and mixtures thereof.
Phases such as C₄A₃₋ₓFₓ$, C₂A_{y}F_{1-y}, CA, C₁₂A₇, CA₂, C₃A, C₂F, CF, CF₂ etc. can be crystalline, partly crystalline or amorphous. The phases mentioned could and typically do contain substitutions with foreign ions (or other/additional foreign ions than those stated explicitly), as is common with technical materials. In the case of phases containing C, A and F it does not matter whether they are considered as aluminates or as ferrites, as long as they are included and not calculated twice.

Calcium sulfate can also be present within the supplementary cementitious materials or in the CSA clinker. This calcium sulfate also has to be taken into account for the calculation of R_{$/(Y+A+F)}. Amorphous aluminate or ferritic phases are special forms of e.g., but not exclusively, C₁₂A₇, CA, C₄AF, CF. Aluminates and/or ferrites introduced by the addition of further components like calcium aluminate or Portland cements to the binder have to be considered as well for the calculation of R_{$/(Y+A+F)}.

To simplify the description, the following abbreviations, which are common in the cement industry, are used: H - H₂O, C - CaO, A - Al₂O₃, F - Fe₂O₃, M - MgO, S - SiO₂ und $ - SO₃. Additionally, compounds are generally indicated in the pure forms thereof, without explicitly stating series of solid solutions/substitution by foreign ions and the like, as are customary in technical and industrial materials. As any person skilled in the art will understand, the composition of the phases mentioned by name in the present invention may vary, depending on the chemism of the raw meal and the type of production, due to the substitution with various foreign ions, such compounds likewise being covered by the scope of the present invention.

Calcium sulfoaluminate clinkers contain mainly polymorphs of ye'elimite. Depending on the raw materials used and the burning temperature they typically also contain belite, ferrites and/or aluminates, anhydrite and may further contain ternesite, see e.g. WO 2013/023728 A2. Calcium sulfoaluminate cements are obtained from CSA clinkers by grinding, usually calcium sulfate is added. Manufacturing of the calcium sulfoaluminate cements takes place in a manner known per se. Typically raw materials are mixed in appropriate amounts, ground and burnt in a kiln to give a clinker. Usually, the clinker is then ground together with calcium sulfate and optionally some or all of the other components to give the cement. A separate grinding is also possible and may be advantageous when the grindability of the components is largely different. The calcium sulfate can be gypsum, bassanite, anhydrite or mixtures thereof. Anhydrite is preferably used.

A calcium sulfoaluminate cement can be obtained by grinding a CSA clinker when that already contains the desired amount of calcium sulfate. Typically, it is obtained by combining CSA clinker with adequate amounts of calcium sulfate. This means that as defined for the present invention the component CSA cement provides ye'elimite and sulfate, as well as optionally aluminates, ferrites, belite and other components, regardless of whether they originate from the CSA clinker or from a mixing of CSA clinker with them, either before, during or after grinding of the CSA clinker. Of course, sulfate, ye'elimite, aluminates, and ferrites can also originate from the SCM component or the optional additional components of the composite binder, so that less is desired in the CSA cement. This means that for manufacturing the binder the sulfate (and also any other phase) can originate from the CSA clinker, the CSA cement, the SCM and even from additional components. With respect to the the sulfate it does not matter whether it is added to the CSA clinker before mixing with the SCM or during mixing, i.e. the CSA cement can be added as one component or as two components, namely ground CSA clinker and ground sulfate.

Calcium sulfoaluminate clinkers and cements containing C₄A₃$ as a main phase are known and available in different qualitites / compositions. For the given invention all are suitable. For example, the following CSA cements are (commercially) available / knwon:

| **Lafarge BCSAF:** | | | |
|---|---|---|---|
| Belite (α; +/-β) C₂S | 40 - 75%; | Ye'elimite C₄A₃$ | 15 - 35%; |
| Ferrite C₂(A,F) | 5 - 25%; | Minor phases | 0.1 - 10% |

| **Lafarge Rockfast®:** | | | |
|---|---|---|---|
| Belite (α; +/-β) C₂S | 0 - 10%; | Ye'elimite C₄A₃$ | 50 - 65% |
| Aluminate CA | 10 - 25%; | Gehlenite C₂AS | 10 - 25%; |
| Ferrite C₂(A,F) | 0 - 10%; | Minor phases | 0 - 10% |

| **Italcementi Alipre®:** | | | |
|---|---|---|---|
| Belite (α; +/-β) C₂S | 10 - 25%; | Ye'elimite C₄A₃$ | 50 - 65%; |
| Anhydrite C$ | 0 - 25%; | Minor phases | 1 - 20% |

| **Cemex CSA:** | | | |
|---|---|---|---|
| Belite (α; +/-β) C₂S | 10 - 30%; | Ye'elimite C₄A₃$ | 20 - 40% |
| Anhydrite C$ | >1%; | Alite C₃S | >1 - 30%; |
| Free lime CaO | <0.5 - 6%; | Portlandite Ca(OH)₂ | 0 - 7%; |
| Minor phases | 0 - 10% | | |

| **Denka® CSA** | | | |
|---|---|---|---|
| Belite (α; +/-β) C₂S | 0 - 10%; | Ye'elimite C₄A₃$ | 15 - 25%; |
| Anhydrite C₂(A,F) | 30 - 40%; | Portlandite Ca(OH)₂ | 20 - 35%; |
| Free lime CaO | 1 - 10%; | Minor phases | 0 - 10% |

| **China Type II & III CSA** | | | |
|---|---|---|---|
| Belite (α; +/-β) C₂S | 10 - 25%; | Ye'elimite C₄A₃$ | 60 - 70%; |
| Ferrite C₂(A,F) | 1 - 15%; | Minor phases | 1 - 15% |

| **Barnstone CSA** | | | |
|---|---|---|---|
| Belite (α; +/-β) C₂S | 22%; | Ye'elimite C₄A₃$ | 60%; |
| Aluminate C₁₂A₇ | 5%; | Alite C₃S | 8%; |
| Ferrite C₂(A,F) | 4%; | Minor phases | 1% |

| **HeidelbergCement BCT** | | | |
|---|---|---|---|
| Belite (α; +/-β) C₂S | 1 - 80%; | Ye'elimite ΣC₄A₃$ | 5 -70%; |
| Ternesite C₅S₂$ | 5 - 75%; | Minor phases | 0 - 30%; |

The calcium sulfoaluminate cement usually comprises 10 - 100 % by weight, preferably 20 - 80 % by weight and most preferred 25 to 50 % by weight C₄A₃₋ₓFₓ$, with x ranging from 0 to 2, preferably from 0.05 to 1 and most preferably from 0.1 to 0.6, 0 - 70 % by weight C₂S, 0 - 30 % by weight, preferably 1 to 15 % by weight and most preferred 3 to 10 aluminates, 0 - 30 % by weight,preferably 3 to 25 and most preferred 5 to 15 % by weight ferrites, 0 - 30 % by weight preferably 3 to 25 % by weight and most preferred 5 to 15 ternesite, 0 - 20 % by weight calcium sulfate and up to 20 % minor phases. As indicated, phases can be present in the CSA clinker or added for obtaining the CSA cement.

In a further embodiment of the invention the calcium sulfoaluminate cement and the binder comprising it has a fineness, according to the particle size distribution determined by laser granulometry, with a d₉₀ ≤ 90 µm, preferably a d₉₀ ≤ 60 µm and most preferred a d₉₀ ≤ 40 µm, whereby the Rosin Rammler Parameter (slope) n can vary from 0.7 to 1.5, preferably from 0.8 to 1.3 and most preferably from 0.9 to 1.15.

The invention is beneficial to all kinds of composite binders from calcium sulfoaluminate cements. CSA cements can be rich in belite or poor as well as contain differing amounts of aluminates and ferrites. Especially preferred are composite binders with a ratio R_{$/(Y+A+F)} of calcium sulfate to ye'elimite, aluminates and ferrites in the composite binder in the range from 0.1 to 0.9. Preferably the ratio is set from 0.15 to below 0.7, especially preferred from 0.2 to 0.55. Any sulfate, aluminate, ferrite or ye'elimite from the supplementary cementitious materials or other additions like e.g. OPC is taken into account when calculating the ratio.

The supplementary cementitious materials can be chosen from all available materials showing latent hydraulic or pozzolanic properties. Preferred are ground granulated blast furnace slag, fly ashes type C and F and natural pozzolans, calcined clays or shales, trass, artificial glasses, other slags rather than ground granulated blast furnace slag, brick-dust and burned organic matter residues rich in silica such as rice husk ash. Especially preferred are calcium-rich artificial galsses, type C fly ashes and ground granulated blast furnace slags.

The supplementary cementitious materials can be added according to the invention in amounts of at least 10 % and up to 90 % by weight, preferably 20 to 80 % by weight are added. The quantity of latent hydraulic materials in the SCM usually ranges from 0 to 100 % by weight, preferably from 20 to 80 % by weight and most preferably from 30 to 70 % by weight of the of the total amount of SCM. The content of pozzolanic materials ranges from 0 to 40 % by weight, preferably from 5 to 35 % by weight and most preferably from 10 to 30 % by weight of the total amount of supplementary cementitious materials.

The preferred amount of SCM in the binder depends on the reactivity of the SCM. For example, when the SCM contains only pozzolanic materials it is preferred to use from 10 to 40 % by weight, especially from 20 to 30 % by weight, SCM in the composite binder. With only latent hydraulic materials as SCM the content of SCM in the binder can be from 10 to up to 90 % by weight, preferably 30 to 60 % by weight are used. Specifically, it is preferred that the content of the supplementary cementitious materials ranges from 30 to 60 % by weight of the binder for supplementary cementitious materials comprising at least 70 % by weight latent hydraulic materials. For supplementary cementitious materials comprising at least 70 % by weight pozzolanic materials the content of the supplementary cementitious materials ranges from 10 to 30 % by weight of the binder.

According to the invention the development of compressive strength is enhanced by adding calcium nitrate and/or calcium nitrite. Surprisingly, calcium nitrate and calcium nitrite are able to accelerate the strength development of composite binders from CSA cements significantly, often the compressive strength after one day is increased by 5 % or even 15 %. The effect after 7 days is often 15 % or even 35 %, and after 28 days 20 % or even 35 %.The amount of calcium nitrate and/or calcium nitrite preferably ranges from 0.1 to 10 % by weight relative to the binder, more preferred from 0.5 to 5 % by weight and most preferred from 1.0 to 2 % by weight.

In a specifically preferred embodiment the CSA cement comprises ternesite in an amount from 1 to 30 % by weight, preferably from 3 to 20 % by weight and most preferred from 5 to 15 % by weight relative to the CSA clinker. Such CSA cements can advantageously be obtained according to WO 2013/023728 A2, WO 2013/023731 A2, or WO 2013/023729 A2. It is also possible to mix a CSA clinker with a ternesite rich clinker. The method according to the invention is particularly beneficial for composite binders comprising CSA, SCM and ternesite.

Further components chosen from e.g. but not exclusively calcium aluminate cements, portland cement or portland cement clinker, lime stone, dolomite, alkali and/or earth alkali salts can be added in amounts of 0.01 to 20 % by weight, preferably in amounts ranging from 0.5 to 15 % by weight. It is especially preferred when a content of portland cement clinker, limestone and/or dolomite ranges from 0.01 to 20 % by weight, preferably from 3 to 20 % by weight and most preferred from 5 to 15 % by weight and a content of alkali salts and earth alkali salts ranges from 0 % to 5 % by weight, preferable from 0.1 to 3 % by weight and most preferred from 0.5 to 2 % by weight.

Furthermore, common admixtures and/or additives can be present. Admixtures are preferably added in an amount of up to 20 % by weight, additives in an amount of up to 3 % by weight. Naturally, the amounts of all components of one specific mixture add up to 100 %.

Admixtures are usually added to concrete, mortar etc. made of a binder, but can also be added to the binder. Besides the calcium nitrate and/or calcium nitrite typical useful admixtures are:
- Further accelerators, which speed up the hydration (hardening), like CaO, Ca(OH)₂, CaCl₂, Al₂(SO₄)₃, KOH, K₂SO₄, K₂Ca₂(SO₄)₃, K₂CO₃, NaOH, Na₂SO₄, Na₂CO₃, NaNO₃, LiOH, LiCl, Li₂CO₃, K₂Mg₂(SO₄)₃, MgCl₂, MgSO₄.
- Retarders that slow the hydration. Typical polyol retarders are sugar, sucrose, sodium gluconate, glucose, citric acid, and tartaric acid.
- Air entrainments which add and entrain air bubbles, which reduces damage during freeze-thaw cycles, increasing durability.
- Plasticizers that increase the workability of plastic or "fresh" concrete, allowing it be placed more easily, with less consolidating effort. A typical plasticizer is lignosulfonate. Plasticizers can be used to reduce the water content of a concrete while maintaining workability and are sometimes called water-reducers due to this use. Such treatment improves its strength and durability characteristics.
- Superplasticizers (also called high-range water-reducers) that are a class of plasticizers that have fewer deleterious effects and can be used to increase workability more than is practical with traditional plasticizers. Compounds used as superplasticizers include sulfonated naphthalene formaldehyde condensate, sulfonated melamine formaldehyde condensate, acetone formaldehyde condensate and polycarboxylate ethers.
- Pigments can be used to change the color of concrete, for aesthetics.
- Corrosion inhibitors are used to minimize the corrosion of steel and steel bars in concrete.
- Bonding agents are used to create a bond between old and new concrete (typically a type of polymer).
- Pumping aids improve pumpability, thicken the paste and reduce separation and bleeding. Especially preferred admixtures for the binders according to the invention are plasticizers and super plasticizers. They are typically used in amounts ranging from 0.05 to 1 % by weight relative to the sum of CSA cement, SCM, and, if applicable, any additional hydraulic component added.

Typical additives are for example but not exclusively fillers, fibres, fabrics / textiles, silica fume and crushed or ground glass . Fillers are e.g. quartz, limestone, dolomite, inert and/or crystalline fly ashes. Fibres are e.g. steel fibres, glass fibres or plastic fibres.

A specifically preferred composite binder of the invention contains:
10 - 89 % by weight CSA cement
10 - 89 % by weight SCM, preferably slag and/or fly ash
1 - 30 % by weight ternesite
and 0.1 - 10 % by weight calcium nitrate and/or nitrite.
This binder can advantageously further contain (super)plasticizers and/or retarders. Typically, (super)plasticizers and/or retarders are added in the commonly known amounts, e.g. 0.05 to 1 % by weight, preferably 0.05 to 0.5 % by weight, relative to the sum of CSA cement, SCM and, if applicable, any additional hydraulic components added.

The binder according to the invention can be used to make concrete, mortar, plaster and other hydraulically setting building materials. It is also useful for manufacturing special construction chemical compositions like tile adhesives, floor screeds, etc. The use can take place in the same manner as that of known binders or cements.

The binder according to the invention shows an enhanced strength development compared to the binders comprising CSA and SCM known from the prior art.

The method of enhancing the strength development according to the invention comprises adding calcium nitrate and/or calcium nitrite to a CSA based binder. The calcium nitrate and/or calcium nitrite is preferably added to the CSA cement, i.e. the ground CSA clinker, together with the SCM. It is of course also possible to add the calcium nitrate and/or calcium nitrite to a binder directly before adding water and any further ingredient desired, like aggregate.

A further aspect of the present invention is the use of calcium nitrate and/or calcium nitrite as addtive for accelerating the strength development or increasing the compressive strength of hydrated CSA binders. To this end calcium nitrate and/or calcium nitrite can be added to a hydraulically setting building material or a special construction chemical composition at any time before adding water or together with the water.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred features that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

### Example 1

A composite binder according to the invention was made from a clinker comprising around 45 g/100 g of beta-C₂S, 35 g/100g of Σ-C₄A₃₋ₓFₓ$ and 11 g / 100 g aluminate (C₃A, CA). The content of ferrites was below 1 g / 100 g. Natural anhydrite was used as sulfate source. As supplementary cementitious material a mixture of slag, ternesite and limestone was used. The binder was composed of 73 % by weight CSA based cement (clinker plus anhydrite), 10 % by weight ternesite, 13 % by weight slag and 4 % by weight limestone. Additionally, 2 % by weight calcium nitrate (anhydrous) was added ontop relative to the amount of binder. For comparison one mixture without adding calcium nitrate (No 2) and one mixture ( No 3) with 27 % quartz instead of the SCM (ternesite, slag, limestone) was used. The R_{$/(Y+A+F)} ratio and composition of the binders is shown in table 1.

**Table 1**

| No. | CSA | slag | Ternesite | limestone | Ca(NO₃)₂ | quartz | ratio $ / Y+A+F |
|---|---|---|---|---|---|---|---|
| 1 | 73 % | 13 % | 10% | 4 % | yes | | 0.35 |
| 2 | 73 % | 13 % | 10% | 4 % | no | | 0.35 |
| 3 | 73 % | | | | no | 27 % | 0.35 |

The strength development was measured as described in EN 196-1 on mortar cubes of 2 cm edge length from a mixture of 2 parts (by weight) cement, 3 parts sand (ISS1, Ø size of 1 mm) and 1 part water. The water/binder ratio was 0.5. The loading velocity was adjusted to 0.4 kN/s. The results are presented in table 2.

**Table 2**

| No. | strength [MPA] after | | | | |
|---|---|---|---|---|---|
| | 1d | 2d | 7d | 28d | 90d |
| 1 | 25.1 | 27.5 | 32.7 | 38.6 | 42.0 |
| 2 | 21.8 | 23.9 | 27.3 | 31.1 | 33.5 |
| 3 | 21.6 | n.d. | 24.3 | 29.4 | 29.6 |

| | | | | | |
|---|---|---|---|---|---|
| n.d. not determined | | | | | |

The results show that calcium nitrate measurably enhances the strength development of CSA based composite binders and especially the reactivity of SCMs. The sample No. 1 has reached a higher compressive strength, around 3 to even 12 MPa higher, compared to the two references at all measuring points.

## Claims

1. Composite binder containing at least one calcium sulfoaluminate cement and at least one supplementary cementitious material, wherein a weight ratio of calcium sulfate to the sum of ye'elimite, aluminates and ferrites ranges from 0.1 to 0.9, and the binder further comprises calcium nitrate and/or calcium nitrite in an amount ranging from 0.1 to 10 % by weight relative to the total mass of the binder.

2. Composite binder according to claim 1, wherein the supplementary cementitious material is chosen from latent hydraulic materials and/or natural or artificial pozzolanic materials, preferably from latent hydraulic slags, especially ground granulated blast furnace slag, type-C and/or type-F fly ashes, calcined clays or shales, trass, brick-dust, artificial glasses, silica fume, and burned organic matter residues rich in silica, especially rice husk ash, or mixtures thereof.

3. Composite binder according to claim 1 or 2, wherein the weight ratio of of calcium sulfate to the sum of ye'elimite, aluminates and ferrites in the binder ranges from 0.15 to 0.85, preferably from 0.2 to 0.75.

4. Composite binder according at least one of claims 1 to 3, wherein the calcium sulfoaluminate cement comprises 10 - 100 % by weight C₄A₃₋ₓFₓ$, with x ranging from 0 to 2, preferably from 0.05 to 1 and most preferably from 0.1 to 0.6, 0 - 70 % by weight C₂S, 0 - 30 % by weight aluminates, 0 - 30 % by weight ferrites, 0 - 30 % by weight ternesite, 0 - 20 % by weight calcium sulfate and up to 20 % minor phases, wherein the sum of all phases adds up to 100%.

5. Composite binder according at least one of claims 1 to 4, wherein it contains 5 to 20 % by weight, preferably from 5 to 10 % by weight, ternesite.

6. Composite binder according at least one of claims 1 to 5, wherein the content of calcium sulfoaluminate cement ranges from 10 to 90 % by weight, preferably from 20 to 70 % by weight and most preferably from 30 to 60 % by weight.

7. Composite binder according at least one of claims 1 to 6, wherein the content of the supplementary cementitious materials ranges from 10 to 90 % by weight, preferably from 20 to 80 % by weight, most preferred from 30 to 70 % by weight.

8. Composite binder according to claim 7, wherein the content of the supplementary cementitious materials ranges from 30 to 60 % by weight of the binder for supplementary cementitious materials comprising at least 70 % by weight latent hydraulic materials.

9. Composite binder according to claim 7, wherein the content of the supplementary cementitious materials ranges from 10 to 30 % by weight of the binder for supplementary cementitious materials comprising at least 70 % by weight pozzolanic materials.

10. Composite binder according to at least one of claims 1 to 9, wherein it comprises at least one of calcium aluminate cement, portland cement, portland cement clinker, limestone, dolomite, ternesite, alkali salts, earth alkali salts, admixtures, and additives

11. Composite binder according to claim 10, wherein the content of a contained calcium aluminate cement, portland cement, portland cement clinker, limestone, ternesite and/or dolomite ranges from 0.1 to 20 % by weight, preferably from 3 to 20 % by weight and most preferred from 5 to 15 % by weight of the binder.

12. Composite binder according to claim 10 or 11, wherein the content of contained alkali salts and/or earth alkali salts ranges from 0.05 % to 5 % by weight, preferably from 0.1 to 3 % by weight and most preferred from 0.5 to 2 % by weight of the binder.

13. Composite binder according to at least one of claims 10 to 12, wherein it contains one or more admixtures chosen from retarders, air entrainment agents, plasticizers, super plasticizers, pigments, corrosion inhibitors, bonding agents, and pumping aids.

14. Composite binder according claim 13, wherein the content of a contained admixture ranges from 0.01 to 5 % by weight preferably from 0.1 to 3 % by weight and most preferred from 0.5 to 1.5 % by weight.

15. Composite binder according to at least one of claims 10 to 14, wherein it contains additives chosen from fillers, fibres, fabrics / textiles, silica fume, and crushed or ground glass.

16. Method of enhancing the strength development of composite binders comprising calcium sulfoaluminate cement and supplementary cementitious materials, **characterized in that** calcium nitrate and/or calcium nitrite are added to the composite binder.

17. Use of calcium nitrate and/or calcium nitrite as strength enhancing additive for composite binders comprising calcium sulfoaluminate cement and supplementary cementitious materials.
